(19) Europäisches Patentamt
European Patent Office
Office européen des brevets

(11) **EP 0 505 659 B1**

(12) **EUROPEAN PATENT SPECIFICATION**

(45) Date of publication and mention
of the grant of the patent:
**12.06.1996 Bulletin 1996/24**

(51) Int Cl.6: **H04N 7/00**

(21) Application number: **91830068.2**

(22) Date of filing: **28.02.1991**

(54) **A method of message transmission over a television channel within the teletext system**

Verfahren zur Nachrichtenübertragung über einen Fernsehkanal mit dem Teletextsystem

Méthode de transmission de messages sur un canal de télévision dans le système télétexte

(84) Designated Contracting States:
**AT BE CH DE DK ES FR GB GR IT LI NL SE**

(43) Date of publication of application:
**30.09.1992 Bulletin 1992/40**

(73) Proprietor: **RAI RADIOTELEVISIONE ITALIANA**
**I-10135 Torino (IT)**

(72) Inventors:
• **d'Amato, Paolo**
**I-10100 Torino (IT)**
• **Vayr, Cesare**
**I-10070 Germagnano (Torino) (IT)**

(74) Representative: **Forattini, Amelia et al**
**c/o Internazionale Brevetti**
**Ingg. ZINI, MARANESI & C. S.r.l.**
**Piazza Castello 1**
**I-20121 Milano (IT)**

(56) References cited:
**EP-A- 0 077 712**      **EP-A- 0 125 802**
**FR-A- 2 509 553**      **IT-B- 1 215 752**

• **IEEE GLOBAL TELECOMMUNICATIONS**
**CONFERENCE 1982 vol. 1/3, 29 November 1982,**
**IEEE; NEW YORK ; US pages 121 - 130;**
**M.SABLATASH AND R.FITZGERALD: 'An ISO**
**OSI layered architecure for the canadian**
**broadcast telidon system'**
• **RADIO FERNSEHEN ELEKTRONIK. vol. 31, no.**
**12, December 1982, BERLIN DD pages 756 - 761;**
**H.WAGNER: 'Systeme zur Zusatzinformation im**
**Fernsehsignal'**
• **PROCEEDINGS OF THE NATIONAL**
**ELECTRONICS CONFERENCE vol. 33, 29**
**October 1979, OAK BROOK, ILLINOIS US pages**
**334 - 336; H.G.BOWN ET AL.: 'TELIDON : Coding**
**and hardware considerations for broadcast**
**applications'**
• **BBC RESEARCH DEPARTMENT REPORT. no. 1,**
**March 1988, TADWORTH GB pages 1 - 10;**
**J.P.CHAMBERS: 'DATACAST: the transmission**
**system'**
• **15TH INTERNATIONAL TV SYMPOSIUM 11 June**
**1987, MONTREAUX, CH pages 181 - 204;**
**C.SCHEPERS AND H.ZIBOLD: 'D2 - MAC : an**
**integrated multinorm receiver'**

## Description

This invention relates to a method of message transmission over a television channel for use in the Teletext system (CCIR System B).

As known, the Teletext data transmission system allows digital messages to be transmitted over a television carrier, the messages being decoded in dedicated circuits associated with the television receiver, to be displayed on screen as alphanumeric information, or to be used differently. The full channel is used for transmission when the television signal is absent; when the television signal is present, one or more field blanking lines are used.

In September 1985, the British Broadcasting Company proposed a method of data transmission, known as "Datacast"(Datacast is a Registered Trade Mark), which allows additional data to be transmitted within the system, independently of the conventional Teletext service (J. P. Chambers, BBC Datacast - The Transmission System, Conference on Electronic Delivery of Data and Software, London 1986).

In the Datacast system, data is transmitted in packets having a variable structure. Among the fields comprised in the packet (address, continuity index, packet repetition index, etc.), some can be of different length, address may exist or not. Hence, the transmission efficiency of the system ,i.e., the percentage of useful bytes with respect to the total number of bytes (octets) in the packet, changes with the configuration chosen: the number of useful bytes in the packet is in the range of 28 to 36, although it is generally no more than 32, if an adequate addressing capacity (say 12 bits) and an explicit continuity index are to be provided.

IT-A-1 215 752, filed on 22 January 1988, proposes a method of data transmission which also allows additional data to be transmitted within the Teletext system, independently of the conventional Teletext service, but has a higher transmission efficiency and is easier to decode than the Datacast method. This method is also claimed to be less vulnerable to errors in the packet header.

However, the method disclosed in the above document is only concerned with the lower levels of the ISO-OSI layered structure as defined in CCIR Recommendation No. 653 (Level 1 (Physical), Level 2 (Data Link) and part of Level 3 (Network). No provision is made for connection to higher levels.

It is now the main object of the invention to improve the method of message transmission disclosed in the above- mentioned document, IT-A-1 215 752, particularly by allowing service or control information to be sent in the packets, for use at the Network and Transport levels of the protocol, without interference with the transmission of the actual data.

The invention achieves the above and other objects and advantages, such as will appear from the following specification, with a method of message transmission as defined in Claim 1.

It is noted that the first field of the header corresponds to the "magazine and row address field" of the Teletext specification.

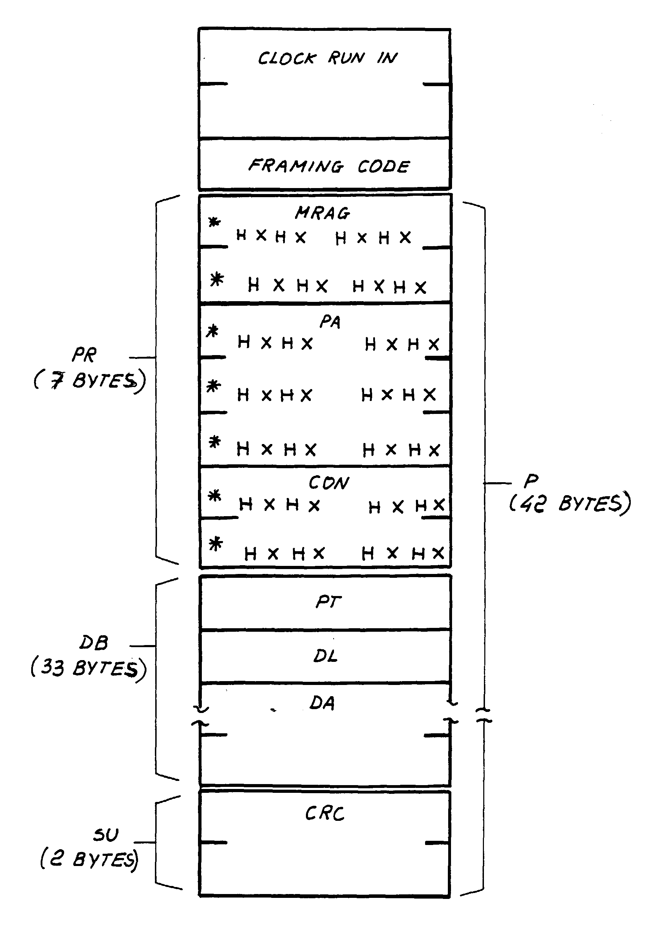

The invention will now be disclosed in more detail, with reference to the attached drawing, in which the only Figure is a symbolic diagram of the packet structure used in the method of the invention.

The Teletext protocols are layered in seven levels, as described in CCIR Recommendation No. 653. Reference is made to that document for the explanations of the levels mentioned below.

Level 1 (Physical) and Level 2 (Data Link) are identical to the corresponding Teletext levels (CCIR System B). Each data row in the Teletext format begins with a string of CLOCK RUN-IN (CRI) and FRAMING CODE (FC), as shown in the Figure, and not described here because it is explained in the above CCIR Rec. 653.

The information unit in Level 3 (Network) according to the method of the invention is a packet P, which comprises 42 bytes (each comprising 8 bits), as in the Teletext protocol CCIR System B.

Each packet comprises the following items, as shown in the Figure:

1) Header PR, comprising 7 bytes, coded in Hamming (8,4);

2) Data Body DB, comprising 33 uncoded bytes;

3) Suffix SU, comprising 2 bytes.

In the Figure, Hamming-coded bytes are marked with an asterisk; information bits are marked with "X", and redundancy bits generated by the Hamming coding are marked with "H". The information bits and the redundant bits in each byte are preferably interleaved.

Header PR of packet P is subdivided into three fields: a Magazine and Row Address field MRAG, a Packet Address field PA, a Control field CON.

Field MRAG comprises two bytes, corresponding to the coding of the conventional Teletext header; they are protected from transmission errors by coding in Hamming (8,4), and contain four useful bits each. In conventional Teletext, the eight useful bits of field MRAG comprise a magazine index and a row index. Three bits are interpreted as a magazine number (which is therefore in the range 1 to 8), and five bits are interpreted as a row address (which is in the range 0 to 31). Only row addresses 0 to 28 are reserved to Teletext pages, and row 29 is reserved to information concerning an entire magazine.

Rows 30 and 31 in the field MRAG have no meaning in the Teletext protocol, and are left available to applications independent from the page-and-magazine structure of Teletext. It is possible to associate to each row the three bits designating the magazine index in the conventional Teletext, and 16 possible combinations of the MRAG bytes are therefore available for utilization. One of them, however, should still be left out: magazine index 8, row 30, corresponding to the hexadecimal value OF, which is reserved to service data for television (e.g. to identify the program being broadcast).

According to the invention, the 15 available MRAG combinations are used to address as many independent data channels. Such combinations may be used totally independently of the Teletext service, because they are ignored by conventional Teletext decoders.

When the Hamming code redundancy is left out, the 15 available addresses are as follows (in hexadecimal notation):

| 1st byte | 2nd byte |
|----------|----------|
| 1        | F        |
| 2        | F        |
| ...      | ...      |
| E        | F        |
| F        | F.       |

Packet Address field PA comprises three Hamming (8,4)-code protected bytes, and therefore has 12 useful bits, corresponding to 4096 different configurations. This field can address 4096 independent data paths. Since the data channels which can be addressed by the codes of field MRAG are 15, the addressable ways are 61440 in total.

Control field CON, comprising two Hamming(8,4)-coded bytes, contains eight information bits. Six of the bits are a Continuity index CC, one bit is a Mask index M, and the remaining bit is an Indicator L to specify the function of two fields in Data Body DB, as explained below.

As known from the above-mentioned IT-A-1.215.752, the transmission of packets of particularly critical messages (e.g., computer programs) can be made with repetition of the transmission of each packet, say three times. This allows the decoding circuits in the receiver to store the successive copies of each packet and to save the version (if any) which is unaffected by errors, or even to attempt correction of the errors by using a comparison of homologous bits in the different packets by majority logic.

In order to allow the repeated packet to be recognized, the continuity index is used. In IT-A-1.215.752 this index comprises 2 bits, and in the transmission of the first packet of a message it takes the value 00, and then it is incremented at each subsequent packet in the message, and is reset to 00 at the fifth packet (modulo 4 incrementation). However, when a packet is repeated, the continuity index is kept constant over the packet repetition, and this allows the decoder to recognize that two or three successive packets are in fact copies of the same packet.

In the present invention, the continuity index comprises six bits, therefore it can take 64 different values. This circumstance is used to effect repeated transmission of the packets by sending a sequence of several, e.g. ten of twenty or more packets, and then repeat the entire sequence, while the receiver stores all the packets before processing homologous packets by the above majority-logic technique. This transmission is better protected from noise occurring in bursts, as known to persons skilled in the art.

Data, if desired, may be masked before transmission, i.e. data may be scrambled to provide protection from reception noise. In order to achieve such protection, the data is XOR-ed with a cyclically repeating, pseudo-random string. Masking may help to reduce the effects of distorsion on certain critical strings which might occur in the data. By transmitting the packet with alternate masking, the likelihood is enhanced that at least one correct reception occurs. The field eligible for masking is the data body and the suffix.

Only two masking modes are provided, i.e. clear transmission and masked transmission. The pseudo-random string used as a mask is preferably as follows (in hex notation):

AF AA 81 4A F2 EE 07 3A 4F 5D 44 86 70 BD B3 43 BC 3F E0 F7 C5 CC 82 53 B4 79 F3 62 A4 71 B5 71 31 10 08 46.

The mask index M takes the value 0 for clear transmission, and 1 for masked transmission.

Data Body DB (which is made up, as explained above, of 33 uncoded bytes) comprises a Data field DA, which is 31 byte long, a Packet Type field PT and a Data Length field DL, each comprising only one byte. Each of these fields can take different meanings. The meanings of fields PT and DL are decided by the value of Indicator bit L in control field CON, as explained below.

Data field DA is reserved for useful data and possible dummy, or filling, bytes. Any dummy bytes in the data field DA of data body DB preferably each consist of the pattern AA (hex). As better explained below, the presence of dummy bytes is only allowed if the optional fields PT and DL are present. In this case field DL will specify the number of meaningful bytes in the packet.

The single byte of Data Length field DL is a regular data byte, to be attached to the bytes of data field DA, if indicator bit L is set to 0; while, if the indicator bit L is set to 1, it specifies the number of meaningful bytes in the packet, i.e. the number of bytes actually utilized in the message, the remaining bytes being dummy.

Packet Type field PT also can take the meaning of a regular data byte, similarly to field DL, if indicator bit L is set to 0. If Indicator bit L is set to 1, on the other hand, Packet Type field PT specifies the type of the packet, as follows.

Four bits of Packet Type field PT are dedicated to information concerning the Network Level, while the remaining four bits concern the Transport Level (see above-mentioned CCIR Rec. 653). The first half-byte can therefore specify 16 possible packet types at the Network level. One of the types is the data packet; the remaining 15 types are different kinds of control packets. The other half-byte can specify 16 possible packet types at the Transport Level. Again, one type is the data packet, while the remaining 15 types are different types of control packets at the Transport Level.

A packet that is data type at the Network Level may also be data type at the Transport Level, or it can be control type at the latter level. In other words, packets regarded as "data" at one level may not be such at higher levels.

No packet type specification is provided for the Session, Presentation and Application Levels (see CCIR Rec. 653) in the preferred embodiment of the invention. However, should such need arise in particular instances, a further packet-type byte may be added, within the invention, only in packets that are still of data type at the Transport Level.

The kinds of control effected by the different types of packets P under specification of the packet type field PT include:

- selective data access: enabling or disabling signals, membership signals, and the like, are sent to specify that data are to be accessed only by individual receiving terminals or by groups of them;

- data crypting: crypting keys are sent to individual receiving terminals to allow them to decrypt subsequently transmitted data;

- receiving terminal configuration: remote control signals are sent to configure terminals, to install new software modules, or to modify pre-installed software.

According to a particularly advantageous feature of the invention, if a packet is of data type at all levels, then the indicator bit in field CON is set to 0, and the Packet Type field and Data Length field also contain data bytes, so that the 33 bytes of the data body are thus entirely utilized for data transmission. However, any incompletely filled packet, even if of data type, must necessarily have the indicator bit set to 1, and must include the Data Length field and the Packet Type field, although the latter will specify the type "Data".

CRC suffix SU, 16-bit long, affords error protection to the entire Data Body DB, (including fields DL and PT, if they exist), and is generated by known techniques, preferably based on the following generating polynomial:

$$x^{16} + x^{12} + x^5 + 1.$$

Another error-correction technique may be used, within the concept of the invention, in lieu of majority logic. With the alternative technique, errors can be corrected on the basis of only two copies of the same packet, with a performance comparable to majority logic comparison based on three copies.

The technique is as follows:

- two copies of the packet are obtained, and in each case the CRC suffix SU is checked: if no errors are signaled in at least one of the cases, the packet is accepted outright, and the procedure terminates; otherwise, both versions of the packet are stored, and the following step is taken;

- an XOR operation is carried out, bit by bit, between the two (error-affected) versions of the Data Body and of the Suffix, and the disagreeing places are noted; all possible combinations are tested in such places, and the CRC Suffix is checked each time: the packet is accepted when the CRC signals no more errors.

The above algorithm only fails when a bit happens to be in error in both versions of the packet, or when the number of errors is too high to permit errors to be corrected in due time.

While the presently preferred embodiment has been described, other embodiments may be devised on the basis of the Packet Type field concept. As an example, according to a different embodiment the Data Length field is not used. Instead, the Packet Type field PT in the first packet of any given message or "letter" (e.g. an entire file or record or any other desired block of data communication) is coded to a predetermined value which specifies that the packet is the first in the message or letter, and which also indicates that one or more bytes following in the data body should be understood to represent the length of the entire letter. The Packet Type field then takes a second desired value in the remaining packets following in the letter. The receiver will determine when the last packet has been received, based on the overall length information contained in the first packet, and will also be able to determine how many of the bytes in the last packet are meaningful, the remaining bytes being dummy.

Where technical features mentioned in any claim are followed by reference signs, those reference signs have been included just for the sole purpose of increasing intelligibility of the claims and accordingly, such reference signs do not have any limiting effect on the scope of each element identified by way of example by such reference signs.

## Claims

1. A method of message transmission over a television channel within the Teletext system, where the data is transmitted in packet format (P) of 42 bytes each, comprising:

   a) a header (PR) comprising 7 Hamming(8,4)-coded bytes (octets), which are subdivided into the following fields:

a first field (MRAG) of 2 bytes forming a data channel address, and which can take the hexadecimal values 1F, 2F, ..., EF, FF, with exception of OF;

a second field (PA) of 3 bytes forming a packet address, and which can take arbitrary values;

a third field (CON) of 2 bytes operating as control codes, in which one bit is an indicator bit (L), said indicator bit (L) being able to take either a first or a second value;

b) a data body (DB) comprising 33 uncoded bytes (octets), which are entirely utilised for data transmission if said indicator bit (L) has said first value, and are subdivided into the following fields if said indicator bit (L) has said second value:

a fourth field (PT,DL) of at least one byte, which is a control field;

a fifth field (DA) of at least 30 bytes, reserved for useful data and possible dummy bytes;

c) a suffix (SU) comprising two bytes (octets) forming a CRC error-checking code for the data body;

characterised in that

if the indicator bit (L) has said second value,

said fourth field (PT,DL) includes a Packet Type field (PT), said packet Type field (PT) specifying the type of the packet, said type of the packet being specified among a plurality of predetermined packet types, each packet being regarded as data or being of control type according to said Packet Type field (PT), and

the kinds of control effected by the different types of packet under specification of the Packet Type field (PT) include a plurality of functions.

2. The method of claim 1 characterized in that said functions include one or more of the following functions:

enabling and disabling of individual receiving terminals or of groups of receiving terminals;

supplying crypting keys to individual receiving terminals to allow them to decrypt subsequently transmitted data;

receiving terminal configuration; and

commands for downloading receiving terminal software.

3. The method of claim 1 characterized in that, if the indicator bit (L) has said second value, said fourth field (PT,DL) includes a Data Length field (DL) of one byte, said Data Length field (DL) specifying the number of meaningful bytes in the packet, the remaining bytes being dummy.

4. The method of claims 1 or 2 or 3, characterized in that the third field (CON) of the header (PR) contains eight useful bits, six of the eight useful bits of the third field forming a continuity index (CC).

5. The method of claim 4, characterized in that one of the eight useful bits in the third field (CON) of the header (PR) is an index (M) of masked or clear transmission of the data in the data body (DB), and in that the data in the data body (DB) is processed before transmission by XOR-ing with a desired mask if said mask index has a first predetermined value, and the data are clear if the mask index has a second predetermined value.

6. The method of one or more of the preceding claims, characterized in that said fifth field (DA) comprises at most 31 bytes.

**Patentansprüche**

1. Verfahren zur Nachrichtenübertragung über einen Fernsehkanal innerhalb des Teletextsystems, bei dem die Daten in Paketformat (P) von jeweils 42 Bytes übertragen werden, mit:

a) einem Sammler (PR) mit 7 Hamming(8,4)-codierten Bytes (Oktetts), die in die folgenden Felder unterteilt sind:

einem ersten Feld (MRAG) von 2 Bytes, das eine Datenkanaladresse bildet, und das die hexadezimalen Werte 1F, 2F,..., EF, FF, mit Ausnahme von OF, annehmen kann;

einem zweiten Feld (PA) von 3 Bytes, das eine Paketadresse bildet, und das willkürliche Werte annehmen kann;

einem dritten Feld (CON) von 2 Bytes, das als Steuercodes arbeitet, in denen ein Bit ein Indikator-Bit (L) ist, wobei das Indikator-Bit (L) in der Lage ist, entweder einen ersten oder einen zweiten Wert anzunehmen;

b) einem Datenkörper (DB) mit 33 uncodierten Bytes (Oktetts), die vollständig zur Datenübertragung benutzt werden, wenn das Indiaktor-Bit (L) den ersten Wert hat, und die in die folgenden Felder unterteilt sind, wenn das Indikator-Bit (L) den zweiten Wert hat:

ein viertes Feld (PT, DL) von mindestens einem Byte, das ein Steuerfeld ist;

ein fünftes Feld (DA) von mindestens 30 Bytes , das für nutzbare Daten und mögliche Blindbytes reserviert ist;

c) einem Suffix (SU) mit zwei Bytes (Oktette), das einen CRC Fehlerüberprüfungscode für den Datenkörper bildet;

dadurch gekennzeichnet, daß

wenn das Indikator-Bit (L) den zweiten Wert hat,

das vierte Feld (PT, DL) ein Pakettypisierungsfeld (PT) beinhaltet, wobei das Pakettypisierungsfeld (PT) die Art des Pakets spezifiziert, wobei die Art des Pakets entlang einer Vielzahl von vorbestimmten Paketarten spezifiziert wird, wobei jedes Paket als Daten angesehen wird oder von der Steuerart gemäß dem Pakettypisierungsfeld (PT) ist; und

die von den verschiedenen Paketarten unter der Spezifikation des Pakettypisierungsfeldes (PT) durchgeführten Steuerarten, eine Vielzahl von Funktionen einschließen.

2. Verfahren gemäß Anspruch 1, dadurch gekennzeichnet, daß die Funktionen eine oder mehrere der folgenden Funktionen einschließen:

Freigeben und Unwirksammachen einzelner Empfangsterminals oder Gruppen von Empfangsterminals;

Liefern von chiffrierten Schlüsseln an einzelne Empfangsterminals, um ihnen zu ermöglichen, hintereinander übertragene Daten zu entschlüsseln;

Empfangsterminal-Konfiguration; und Befehle zum Programmladen der Empfangsterminal-Software.

3. Verfahren gemäß Anspruch 1, dadurch gekennzeichnet, daß wenn das Indikator-Bit (L) den zweiten Wert hat, das vierte Feld (PT, DL) ein Datenlängenfeld (DL) von einem Byte einschließt, wobei das Datenlängenfeld (DL) die Anzahl von bedeutungsvollen Bytes in dem Paket spezifiziert, wobei die restlichen Bytes blind sind.

4. Verfahren gemäß den Ansprüchen 1 oder 2 oder 3, dadurch gekennzeichnet, daß das dritte Feld (CON) des Sammlers (PR) acht nutzbare Bits enthält, wobei sechs der acht nutzbaren Bits des dritten Feldes einen Kontinuitätsindex (CC) bilden.

5. Verfahren gemäß Anspruch 4, dadurch gekennzeichnet, daß eines der acht nutzbaren Bits in dem dritten Feld (CON) des Sammlers (PR) ein Index (M) einer maskierten oder uncodierten Übertragung der Daten in dem Datenkörper (DB) ist, und daß die Daten in dem Datenkörper (DB) vor der Übertragung durch Antivalenzbildung (XOR) mit einer gewünschten Maske verarbeitet werden, wenn der Maskenindex einen ersten vorbestimmten Wert hat, und die Daten uncodiert sind, wenn der Maskenindex einen zweiten vorbestimmten Wert hat.

6. Verfahren gemäß einem oder mehreren der vorherigen Ansprüche, dadurch gekennzeichnet, daß das fünfte Feld (DA) höchstens 31 Bytes aufweist.

## Revendications

1. Procédé de transmission de messages par l'intermédiaire d'un canal de télévision dans le système télétexte, les données étant transmises selon un format (P) de paquets de chacun 42 multiplets comprenant :

a) une en-tête (PR) comprenant 7 multiplets (octets) codés selon le code de Hamming (8,4), qui sont répartis dans les zones suivantes :

une première zone (MRAG) de 2 multiplets formant une adresse de canal de données et qui peut prendre des valeurs hexadécimales 1F, 2F, ..., EF, FF, à l'exception de OF ;
une seconde zone (PA) de 3 multiplets formant une adresse de paquet et qui peut prendre des valeurs arbitraires;

une troisième zone (CON) de 2 multiplets agissant en tant que codes de commande, dans laquelle un bit est un bit indicateur (L), ledit bit indicateur (L) étant à même de prendre une première ou une seconde valeur ;

b) un bloc de données (DB) comprenant 33 multiplets (octets) non codés, qui sont entièrement utilisés pour une transmission de données si ledit bit indicateur (L) possède ladite première valeur, et, si ledit bit indicateur (L) possède ladite seconde valeur, sont répartis en les zones suivantes :

une quatrième zone (PT,DL) d'au moins un multiplet, qui est une zone de commande ; une cinquième zone (DA) d'au moins 30 multiplets, réservés pour des données utiles et d'éventuels multiplets fictifs ;

c) un suffixe (SU) comprenant deux multiplets (octets) formant un code de contrôle d'erreurs CRC pour le bloc de données ;

caractérisé en ce que si le bit indicateur (L) possède ladite seconde valeur, ladite quatrième zone (PT,DL) comprend une zone de type de paquet (PT), ladite zone de type de paquet (PT) spécifiant le type du paquet, ledit type du paquet étant spécifié parmi une pluralité de types de paquets prédéterminés, chaque paquet étant considéré comme des données ou étant du type commande en fonction de ladite zone de type de paquet (PT), et les types de commande exécutés par les différents types de paquets sous la spécification de la zone de type de paquet (PT) incluent une pluralité de fonctions.

2. Procédé selon la revendication 1, caractérisé en ce que lesdites fonctions comprennent une ou plusieurs des fonctions suivantes :

validation et invalidation de terminaux individuels de réception ou de groupes de terminaux de réception ; envoi de codes de cryptage à des terminaux individuels de réception pour leur permettre de décrypter des données transmises ultérieurement ; une configuration de terminal de réception ; et des commandes pour le déchargement d'un logiciel de terminal de réception.

3. Procédé selon la revendication 1, caractérisé en ce que, si le bit indicateur (L) possède ladite seconde valeur, ladite quatrième zone (PT,DL) comprend une zone de longueur de données (DL) d'un multiplet, ladite zone de longueur de données (DL) spécifiant le nombre de multiplets significatifs dans le paquet, les autres octets étant fictifs.

4. Procédé selon la revendication 1 ou 2 ou 3, caractérisé en ce que la troisième zone (CON) de l'entête (PR) contient huit bits utiles, six des bits utiles de la troisième zone formant un index de continuité (CC).

5. Procédé selon la revendication 4, caractérisé en ce que l'un des huit bits utiles dans la troisième zone (CON) de l'en-tête (PR) est un index (M) de transmission masquée ou en clair des données dans le bloc de données (DB), et en ce que les données dans le bloc de données (DB) sont traitées avant leur transmission, en étant combinées selon la combinaison OU-EXCLUSIF avec un masque désiré si ledit index de masque possède une première valeur prédéter minée, et les données sont en clair si l'index de masque possède une seconde valeur prédéterminée.

6. Procédé selon une ou plusieurs des revendications précédentes, caractérisé en ce que ladite cinquième zone (DA) comprend au maximum 31 multiplets.